# EUROPÄISCHE PATENTSCHRIFT

(11) **EP 2 197 813 B1**
(45) Veröffentlichungstag und Bekanntmachung des Hinweises auf die Patenterteilung: **11.07.2018**
(21) Anmeldenummer: 08837017.6
(22) Anmeldetag: 18.09.2008
(51) Int. Cl.: C04B 41/87, C04B 41/89, F23Q 7/00

(54) **KERAMISCHER SCHICHTVERBUND**
CERAMIC LAYER COMPOSITE
COMPOSITE CÉRAMIQUE STRATIFIÉ

(30) Priorität: 05.10.2007 DE 102007047590
(43) Veröffentlichungstag der Anmeldung: 23.06.2010
(73) Patentinhaber: Robert Bosch GmbH, 70442 Stuttgart (DE)
(72) Erfinder: LIEMERSDORF, Susanne, 70839 Gerlingen (DE)
(86) Internationale Anmeldenummer: PCT/EP2008/062411
(87) Internationale Veröffentlichungsnummer: WO 2009/047096

(56) Entgegenhaltungen:
- EP-A- 1 394 138
- EP-A- 1 544 185
- WO-A-2007/056876
- DE-A1-102005 062 115
- US-A- 5 578 349
- US-A1- 2003 138 641
- US-A1- 2006 246 319
- ROSENBERGER J: "Herstellung und Charakterisierung von dünnen Bariumtitanatschichten" DISSERTATION ZUR ERLANGUNG DES GRADES DER DOKTORS DERNATURWISSENSCHAFTEN DER TECHNISCHEN FAKULTAET DER UNIVERSITAETDES SAARLANDES, 1994, Seite 28, XP002255640

## Beschreibung

### Stand der Technik

Die vorliegende Erfindung geht aus von einem keramischen Schichtverbund gemäß dem Oberbegriff des Anspruchs 1. Weiterhin betrifft die Anmeldung ein Verfahren zur Herstellung eines keramischen Schichtverbundes.

US 2006/0246319 A1 bezieht sich auf eine stoßwiderstandsfähige Mehrschichtbeschichtung. Ein Bauteil für eine Turbine umfasst ein keramisches Substrat mit einer Oberfläche, eine Barriereschicht, die mit der Substratoberfläche verbunden ist und eine stoßwiderstandsfähige Schicht, die mit der Barriereschicht verbunden ist. Die stoßwiderstandsfähige Schicht hat eine Porosität, die zwischen 10 % und 30 % liegt. Die stoßwiderstandsfähige Schicht, die Barriereschicht sowie die Flächen, an denen die Schichten mit der Substratoberfläche verbunden sind, weisen ein höheres Schervermögen auf als das Substrat.

EP 1 544 185 A2 bezieht sich auf eine Beschichtung, welche eine obere Schicht aufweist, welche die Geschwindigkeit eines Gasstroms reduziert. Ein Composit, welches ein siliziumbasiertes Substrat aufweist, umfasst eine Oberschicht, die eine Geschwindigkeitsreduzierung eines Gasstroms bewirkt. Dadurch wird die Beanspruchung von Bauteilen, die andernfalls mit einem ungebremsten Gasstrom in Verbindung gerieten, reduziert. Die geschwindigkeitsreduzierende Schicht reduziert die Geschwindigkeit eines auftreffenden Gasstroms um mindestens 50 % über die Dicke der Geschwindigkeitsreduzierungsschicht gesehen.

EP 1 394 138 A2 bezieht sich auf eine Schutzschicht für Keramiken. Ein Keramikmatrixverbund wird über eine Aluminium umfassende Schutzschicht von hohen Temperaturen und von einer Feuchte enthaltenden Umgebung geschützt. Die schützende Oberschicht umfasst Aluminium um eine darunterliegende Monolithschicht gegen Temperaturen, die 1500°C übersteigen, zu schützen. Die Porosität der Beschichtung beträgt mehr als 15 %, wodurch verbesserte Thermoschockeigenschaften erreicht werden.

US 2003/0138641 A1 bezieht sich auf korrosionsresistente Kermiken. Diese umfassen ein Substrat wie beispielsweise Siliziumnitrit, Siliziumcarbid. Es ist eine Oberflächenschutzschicht vorgesehen, die Zirkoniumoxid aufweist, welches mit einem Element aus der Gruppe IIIA des Periodensystems stabilisiert ist. Der Aluminium- und Siliziumgehalt in der Oberflächenschutzschicht beträgt nicht mehr als 1 Masseprozent. Insbesondere weist die Oberflächenschicht eine Dicke zwischen 5 mm und 200 mm auf sowie eine Porosität, die zwischen 5 % und 30 % liegt. Die Antikorrosionskeramik weist eine hohe Widerstandsfähigkeit gegen Korrosion und einen Temperaturbereich von unterhalb 1000°C auf.

WO 2007/056876 A1 bezieht sich auf ein Verfahren zur Herstellung eines porösen keramischen Dünnfilms. Für eine Lösung oder eine Suspension eines organischen und/oder anorganischen Metallverbundes als Ausgangsmaterial wird mit einem eingemischten, nicht-löslichen Porenbildner versetzt. Das Gemisch wird als Schicht eines Dünnfilms aufgesprüht und der Porenbildner unter Ausbildung einer wenigstens teilweise offenporigen Struktur mindestens teilweise thermisch zersetzt oder ausgebrannt.

US 5,578349 A bezieht sich auf ein Verfahren zur Beschichtung einer keramischen Glühkerze mit einem korrosionsbeständigen Material. Gemäß des vorgeschlagenen Verfahrens wird eine gleichmäßig anhaftende Tantaloxidbeschichtung auf einen Abschnitt einer keramischen Glühkerze aufgebracht, wodurch die Glühkerze gegen eine korrosive oder erosive Umgebung geschützt wird, welche durch die Verbrennung alternativer Kraftstoffe in einem Dieselmotor entsteht. Die Beschichtung ist ein Tantaloxid, welches auf eine Siliziumnitrit-Glühkerze durch Plasmasprayablagerung aufgebracht wird.

DE 10 2005 062 115 A1 bezieht sich auf ein Glüh-, Zünd- oder ein Heizelement für Verbrennungs- und/oder Heizvorrichtungen. Es wird eine Korrosionsschutzschicht für eine siliziumhaltige Keramik aufweisende Teile des Glüh-, Zünd- oder Heizelementes offenbart. Diese zeichnet sich dadurch aus, dass die Korrosionsschutzschicht aus einem Gemisch aus SiO₂ und mindestens einem weiteren Stoff zusammengesetzt ist.

Gegenüber Oxidkeramiken zeichnen sich Nichtoxid-Keramiken durch einen höheren Anteil kovalenter Bindungen aus. Diese ermöglichen durch die starken Bindungsenergien hohe chemische und thermische Stabilität, sorgen für einen hohen Elastizitätsmodul und verleihen große Festigkeit und Härte. Sie zeigen jedoch gleichzeitig eine geringere Duktilität und recht hohe Sprödigkeit.

Insbesondere Siliziumnitrid-Keramiken werden für Maschinenbauteile mit sehr hohen dynamischen Beanspruchungen und Zuverlässigkeitsforderungen eingesetzt. Zudem eignen sich diese als Hochtemperatur-Werkstoff. Beispiele für Einsatzgebiete von Siliziumnitrid-Keramiken sind Glühstiftkerzen in Verbrennungskraftmaschinen, Heizelemente, Produkte in der Metallbearbeitung mit Schneidwerkstoffen (Wendeschneidplatten), die Wälzlagertechnik mit Kugeln, Rollen und Ringen und hoch belastete Maschinenelemente im Motoren- oder Turbinenbau.

In heißen aggressiven Medien kann es jedoch zu Problemen beim Einsatz der Nichtoxid-Keramiken kommen. Aufgrund ihrer Sprödigkeit und offenen Porosität sind diese hochtemperaturoxidationsempfindlich. Durch korrosive Angriffe können beispielsweise Materialdegeneration, Festigkeitsverlust, Risse und Brüche auftreten und damit zu einem schnelleren Verschleiß der Bauteile und Komponenten führen. Um die Betriebssicherheit solcher keramischer Komponenten zu erhöhen und ihre Haltbarkeit und Standzeit zu verbessern, müssen diese wirksam vor Korrosion geschützt werden.

Eine geeignete Maßnahme zum Korrosionsschutz ist die Beschichtung der Nichtoxid-Keramik mit einer weiteren keramischen Schicht. Insbesondere Klebeverbindungen, mit denen Keramiken miteinander verbunden werden können, sind jedoch nur begrenzt thermisch belastbar und daher für eine Hochtemperaturanwendung gänzlich ungeeignet.

Um einen ausreichenden Korrosionsschutz auch bei Hochtemperaturanwendungen zu erzielen, ist es daher bekannt, eine Keramikschicht auf eine Nichtoxid-Keramik aufzubringen, wobei die aufgebrachte Keramikschicht chemisch an die Nichtoxid-Keramik gebunden ist. Das Aufbringen der keramischen Schicht erfolgt dabei durch ein atmosphärisches Plasmasprühverfahren.

Insbesondere bei Anwendungen für Glühstiftkerzen wird diese jedoch durch einen auftreffenden Kraftstoffstrahl beim Einspritzen von Kraftstoff in einen Brennraum der Verbrennungskraftmaschine einem Thermoschock und Erosion ausgesetzt. Im ungünstigsten Fall kann dieser Thermoschock zu einer Rissbildung oder zum Platzen der Keramik führen. Die Erosion ergibt sich durch Korrosion und Abtrag der Korrosionsprodukte, was zu einem Fortschreiten der Korrosion führt.

### Offenbarung der Erfindung

### Vorteile der Erfindung

Ein erfindungsgemäß ausgebildeter keramischer Schichtverbund umfasst ein keramisches Substrat aus einer Nichtoxid-Keramik, auf das eine keramische Schicht aufgebracht ist. Die keramische Schicht weist eine große spezifische Oberfläche auf.

Eine große spezifische Oberfläche im Sinne der vorliegenden Erfindung bedeutet eine spezifische Oberfläche, die im Bereich von 10 bis 350 m²/g liegt.

Bei Einsatz des keramischen Schichtverbundes für Glühstiftkerzen in Verbrennungskraftmaschinen, insbesondere in selbstzündenden Verbrennungskraftmaschinen, wirkt die keramische Schicht mit der großen spezifischen Oberfläche als Verdampfungsschicht. Auf den keramischen Schichtverbund auftreffende Flüssigkeit verdampft an der Verdampfungsschicht und bildet vorzugsweise eine dampfförmige Schicht aus. Diese dampfförmige Schicht unterbindet das Auftreffen eines kalten Kraftstoffstrahls beim Einspritzen von Kraftstoff in die Verbrennungskraftmaschine und den damit verbundenen Thermoschock. Die dampfförmige Schicht wirkt hierbei als Isolationsschicht.

Durch die große spezifische Oberfläche steht eine große Oberfläche zur Verfügung, an der der auftreffende Kraftstoffstrahl verdampfen kann. Dies führt zu einer schnelleren Verdampfung und damit zu einer weniger starken Abkühlung der Glühstiftkerze als dies bei einer kleineren spezifischen Oberfläche der Glühstiftkerze der Fall ist.

Geeignete Nichtoxid-Keramiken, die für das keramische Substrat eingesetzt werden können, sind zum Beispiel Siliziumnitrid, Siliziumcarbid und Aluminiumnitrid.

Unter dem Begriff Nichtoxid-Keramik werden erfindungsgemäß auch Nichtoxid-Keramikmaterialien verstanden, die mit ein oder mehreren Zusätzen dotiert oder versetzt sein können. Die Zusätze können beispielsweise ausgewählt sein aus der Gruppe Al₂O₃, MgO, Yb₂O₃, Y₂O₃ und andere Seltenerdoxide, die zum Beispiel als Sinteradditive bei der Herstellung eingesetzt werden. Mit solchen Additiven können die Eigenschaften des keramischen Materials beeinflusst und verbessert werden. Solche Materialsysteme haben sich insbesondere auch für Hochtemperaturanwendungen bewährt.

Besonders bevorzugt als Nichtoxid-Keramik ist Siliziumnitrid, da dieses über eine Kombination von hervorragenden Werkstoffeigenschaften, die extremsten Einsatzbedingungen gerecht werden können, verfügt. Insbesondere eignet sich Siliziumnitrid für den Einsatz bei Hochtemperaturanwendungen, wie z.B. für Glühstiftkerzen. Bei Glühstiftkerzen wird das keramische Substrat im Allgemeinen auf eine Temperatur von bis zu 1400°C aufgeheizt. Zudem zeigt Siliziumnitrid eine gute Temperaturwechselbeständigkeit, wie diese insbesondere bei Glühstiftkerzen durch das Auftreffen des kalten Kraftstoffstrahls auftritt.

Da Siliziumnitrid jedoch in Gegenwart aggressiver Medien zur Korrosion neigt, ist es notwendig, das Siliziumnitrid gegen Korrosion zu schützen. Dies erfolgt durch das Auftragen einer keramischen Schicht mit geringer Porosität, die als Korrosionsschutzschicht wirkt. Diese keramische Schicht ist zwischen dem keramischen Substrat und der keramischen Schicht mit der großen spezifischen Oberfläche angeordnet.

Eine geringe Porosität im Sinne der vorliegenden Erfindung bedeutet, dass das Porenvolumen kleiner ist als 10%.

Die keramische Schicht mit der geringen Porosität, die als Korrosionsschutzschicht wirkt, ist vorzugsweise eine chemisch gebundene keramische Schicht aus Al₂O₃, AlN, Seltenerdsilikaten wie Yb₂O₃*SiO₂ oder Y₂O₃*SiO₂, Seltenerdoxiden, Si₃N₄, Mullit, Cordierit oder Alumosilikaten. Unter dem Begriff chemisch gebunden wird erfindungsgemäß verstanden, dass ionische und/oder kovalente Bindungen zwischen den Schichten ausgebildet werden. Zusätzlich kann die Schicht auch mechanisch an das Substrat gebunden sein.

Die zusätzliche chemische Bindung der keramischen Schicht mit geringer Porosität bietet gegenüber einer rein mechanischen Anbindung und physikalischen Wechselwirkungen den Vorteil, dass eine Zerrüttung der Verbindung zwischen dem Substrat und der keramischen Schicht mit geringer Porosität deutlich mehr Energie erfordert und ein Rissfortschritt im Keramikgefüge deutlich verzögert werden kann. Die Verbindung kann bevorzugt derart gestaltet sein, dass im Übergang von der Substratoberfläche zur keramischen Schicht mit der geringen Porosität eine gleitende Anpassung von Wärmedehnung und elastischen Konstanten erreicht wird. Vorteilhafterweise kann durch die erfindungsgemäße Erzeugung eines fließenden Übergangs in den Materialeigenschaften das Abplatzen der Korrosionsschutzschicht verhindert werden. Dies ermöglicht eine deutlich verbesserte Verschleißfestigkeit und verlängerte Haltbarkeit des Substrats.

Das keramische Material der keramischen Schicht mit der geringen Porosität wird zusätzlich vorzugsweise so ausgewählt, dass die Materialeigenschaften den Materialeigenschaften des keramischen Substrates möglichst ähnlich sind. Insbesondere die Wärmeausdehnungskoeffizienten des Substratmaterials und der keramischen Schicht mit der geringen Porosität liegen vorzugsweise in einem engen Bereich beieinander. Durch diese Auswahl wird verhindert, dass zwischen den Schichten zu große Spannungen auftreten, insbesondere bei häufigen und extremen Thermowechselbelastungen. Auf diese Weise können Gradienten-Keramikverbundsysteme bereitgestellt werden, die eine hohe Festigkeit und eine ausgezeichnete Temperaturwechselbeständigkeit aufweisen.

Die Dicke der keramischen Schicht mit der geringen Porosität liegt vorzugsweise im Bereich von 2 µm bis 1mm, besonders bevorzugt von 2 µm bis 100 µm.

In einer Ausführungsform der Erfindung ist zwischen der Substratoberfläche und der keramischen Schicht mit der geringen Porosität mindestens eine weitere keramische Schicht enthalten. Die weiteren keramischen Schichten, die zwischen der Substratoberfläche und der keramischen Schicht mit der geringen Porosität enthalten sind, sind vorzugsweise ebenfalls chemisch mit der jeweils darunter liegenden keramischen Schicht verbunden. Gleichzeitig kann auch eine mechanische Anbindung an die darunter liegende Schicht vorliegen. Die mindestens eine zwischen der Substratoberfläche und der keramischen Schicht mit der geringen Porosität liegende keramische Schicht kann aus dem gleichen oder einem anderen keramischen Material wie die keramische Schicht mit geringer Porosität bestehen. Die weitere keramische Schicht kann in einer bevorzugten Ausführungsform als Haftvermittlungsschicht zwischen dem keramischen Substrat und der keramischen Schicht mit der geringen Porosität wirken. Durch die weitere keramische Schicht kann die Korrosionsbeständigkeit des Substrates nochmals deutlich erhöht werden.

Die mindestens eine weitere keramische Schicht kann eine Dicke im Bereich von 2 µm bis 1 mm, vorzugsweise von 20 µm bis 100µm aufweisen. Die keramische Schicht mit der großen spezifischen Oberfläche kann in einer Ausführungsform dicker ausgestaltet sein als die erste keramische Schicht. Die mindestens eine weitere keramische Schicht wirkt vorzugsweise ebenfalls als Korrosionsschutzschicht.

Die Schichtenabfolge vom Substrat bis zur keramischen Schicht mit der großen spezifischen Oberfläche ist so ausgestaltet, dass sich an den Übergängen der Schichten jeweils ein optimaler Gradient in den Materialeigenschaften ergibt, insbesondere in den Wärmeausdehnungskoeffizienten. Durch fließende Übergänge in den Materialeigenschaften können Spannungen zwischen den keramischen Schichten und ein Abplatzen der einzelnen keramischen Schichten verhindert oder zumindest vermindert werden. Der keramische Schichtverbund weist somit eine hervorragende Korrosions- und Verschleißbeständigkeit auf.

Der fließende Übergang in den Materialeigenschaften wird dadurch erzielt, dass die keramische Schicht mit der geringen Porosität und die keramische Schicht mit der großen spezifischen Oberfläche aus derselben Keramik gefertigt sind. Dabei ist es bevorzugt, dass die Prozesseigenschaften beim Auftragen der Keramik derart geändert werden, dass die Schicht zunächst eine geringe Porosität aufweist und dann die Parameter derart geändert werden, dass die spezifische Oberfläche allmählich vergrößert wird. Hierzu eignen sich insbesondere Plasmasprühprozesse.

Vorteil der Verwendung einer gleichen Keramik für die keramische Schicht mit der geringen Porosiät und die keramische Schicht mit der großen spezifischen Oberfläche ist es, dass diese die gleichen Werkstoffeigenschaften, insbesondere den gleichen Temperaturausdehnungskoeffizienten aufweisen.

Geeignete Keramiken für die keramische Schicht, die die große spezifische Oberfläche aufweist, sind zum Beispiel Mullit, ein Seltenerdsilikat, beispielsweise Y₂O₃*SiO₂ oder Yb₂O₃*SiO₂, Cordierit, ein Alumosilikat, Aluminiumnitrid, Aluminiumoxid oder Mischungen daraus. Bevorzugte Materialien für die keramische Schicht mit der großen spezifischen Oberfläche sind Mullit oder ein Seltenerdsilikat. Zum Erzeugen der großen spezifischen Oberfläche ist es bevorzugt, dass die keramische Schicht porös ist. Hierbei ist es bevorzugt, wenn die Porosität der Schicht so eingestellt wird, dass sie hinsichtlich der Komponenten des auftreffenden Kraftstoffes, wenn der keramische Schichtverbund in einer Glühstiftkerze eingesetzt wird, eine optimale Verdampfung ermöglicht. Die Einstellung der Porosität erfolgt dabei im allgemeinen durch eine gezielte Abscheidung der Keramik auf der zu beschichtenden Oberfläche oder durch Einlagerung von zum Beispiel Polymerpartikeln, die nach dem Beschichten aus der Keramik ausgebrannt werden.

Alternativ ist es auch möglich, dass die keramische Schicht mit der großen spezifischen Oberfläche an ihrer Oberfläche Vertiefungen enthält oder in Form einer Mikrostruktur aufgebracht ist. Durch die Vertiefungen an der Oberfläche beziehungsweise die aufgebrachte Mikrostruktur wird die spezifische Oberfläche ebenfalls vergrößert. Die Vertiefungen bzw. die Mikrostruktur werden z.B. durch eine Laserbehandlung erzeugt.

Offenbart ist weiterhin ein Verfahren zur Herstellung des keramischen Schichtverbundes. Hierbei wird die keramische Schicht mit der großen spezifischen Oberfläche durch einen Plasmasprühprozess, ein Suspensionsplasma-Verfahren, ein CVD (Chemical Vapor Deposition)- oder PVD (Physical Vapor Deposition)-Verfahren oder durch Auftragen einer Sol-Gel-Suspension und anschließende thermische Behandlung aufgetragen. Vorteil des Plasmasprühprozesses, des Suspensionsplasma-Verfahrens, des CVD- oder PVD-Verfahrens ist es, dass sich mit diesen gezielt eine Oberflächenstruktur der keramischen Schicht mit der großen spezifischen Oberfläche einstellen lässt.

Bei dem Auftrag der keramischen Schicht mit der großen spezifischen Oberfläche durch eine Sol-Gel-Suspension sind in der Suspension vorzugsweise ebenfalls Polymerpartikel enthalten, die bei der thermischen Behandlung aus der Schicht ausgebrannt werden, um Poren in der zweiten keramischen Schicht zu erzeugen.

Bevorzugt erfolgt der Auftrag der keramischen Schicht mit der großen spezifischen Oberfläche mit Hilfe des Plasmasprühprozesses. Hierbei können sowohl ein atmosphärischer Plasmasprühprozess (APS) als auch Plasmasprühverfahren unter Vakuum eingesetzt werden.

Als Plasmagas werden vorzugsweise Argon oder Helium verwendet. Diesen kann zusätzlich gezielt ein reduzierendes Gas zugesetzt werden. Bevorzugt als reduzierendes Gas ist Wasserstoff. Wenn Mischungen aus Argon und Wasserstoff oder Helium und Wasserstoff eingesetzt werden, so liegt der Anteil an Wasserstoff vorzugsweise unter 5 Vol.-%.

Durch die Zugabe des reduzierenden Gases zum Plasmagas kann zunächst eine möglicherweise auf der Substratoberfläche vorhandene Oxidschicht entfernt werden. Um eine bessere Haftung der keramischen Schichten auf dem Substrat zu erzielen, ist es möglich, das Substrat zunächst aufzurauen. Eine aufrauende und reinigende Vorbehandlung der Substratoberfläche kann beispielsweise durch Bestrahlen mit kleinen Partikeln erfolgen. Vorzugsweise erfolgt dies mit kleinen Partikeln unter niedrigem Druck, um Defekte und Schädigungen des Substrates zu verringern oder zu vermeiden.

Auch das Aufbringen der keramischen Schicht mit der geringen Porosität erfolgt vorzugsweise durch einen atmosphärischen Plasmasprühprozess (APS) auf die Oberfläche des keramischen Substrates.

Gleichzeitig mit der aufrauenden und reinigenden Vorbehandlung kann eine keramische Schicht auf das Substrat aufgebracht werden. Als pulverförmiger Beschichtungszusatz können dem Plasmagas hierzu alle metallischen oder keramischen Materialien zugesetzt werden, die auf dem Substrat eine keramische Schicht bilden oder in eine solche keramische Schicht überführt werden können. Dies sind beispielsweise Aluminiumpulver, das durch Nitrierung mit Stickstoff in AlN überführt werden kann, Al₂O₃, Si₃N₄, Cordierit, Mullit, Seltenerdsilikate oder Alumosilikate.

Der Beschichtungszusatz für die keramische Schicht mit geringer Porosität wird vorzugsweise so ausgewählt, dass die resultierende keramische Schicht möglichst ähnliche Materialeigenschaften, insbesondere einen ähnlichen Wärmeausdehnungskoeffizienten, zu dem keramischen Material des Substrats aufweist. Der Beschichtungszusatz für die keramische Schicht mit der großen spezifischen Oberfläche wird erfindungsgemäß so ausgewählt, dass die resultierende keramische Schicht möglichst ähnliche Materialeigenschaften zu der keramischen Schicht mit der geringen Porosität aufweist. Durch einen fließenden Übergang in den Materialeigenschaften wird vorteilhafterweise das Abplatzen der keramischen Schichten verhindert. Dies ermöglicht eine deutlich verbesserte Korrosions- und Verschleißfestigkeit sowie eine verlängerte Haltbarkeit des keramischen Substrates aufgrund einer verbesserten Temperaturwechselbeständigkeit.

Die für die keramische Schicht mit der großen spezifischen Oberfläche erforderliche große spezifische Oberfläche kann zum Beispiel durch Aufrauen oder durch gezieltes Aufbringen einer Mikrostruktur erzielt werden.

Alternativ ist es auch möglich, dass beim Auftragen der Keramik der keramischen Schicht mit der großen spezifischen Oberfläche Partikel im Beschichtungsmaterial enthalten sind, die nach dem Auftragen entfernt werden, um Poren in der zweiten keramischen Schicht zu erzeugen. Das Entfernen der Partikel kann zum Beispiel durch Herauslösen der Partikel aus der Keramik erfolgen, wenn diese in einem Lösungsmittel löslich sind. Alternativ ist es auch möglich, insbesondere wenn das Aufbringen der keramischen Schicht mit der großen spezifischen Oberfläche bei niedrigen Temperaturen erfolgt, Polymere einzusetzen, die bei erhöhter Temperatur aus der Keramik ausgebrannt werden können.

Um die Bildung der chemischen Verbindung zwischen der Substratoberfläche und der keramischen Schicht mit der geringen Porosität, der keramischen Schicht mit der geringen Porosität und der keramischen Schicht mit der großen spezifischen Oberfläche beziehungsweise der Substratoberfläche und der keramischen Schicht mit der großen spezifischen Oberfläche zu verbessern, ist es bevorzugt, wenn das Substrat vor oder während der Beschichtung mit der keramischen Schicht mit der geringen Porosität bzw. der keramischen Schicht mit der großen spezifischen Oberfläche erhitzt wird. Besonders bevorzugt wird das Substrat über die Kristallisationstemperatur des Beschichtungsmaterials erhitzt. Durch das Erhitzen des Substrats kann zusätzlich am Übergang von der Substratoberfläche zur keramischen Schicht mit geringer Porosität beziehungsweise von der keramischen Schicht mit geringer Porosität zur keramischen Schicht mit der großen spezifischen Oberfläche durch Diffusion ein Gradient in den Materialeigenschaften erzeugt werden, der die Temperaturwechselbeständigkeit des resultierenden keramischen Schichtverbundes deutlich erhöht.

Wenn zwischen der Substratoberfläche und der keramischen Schicht mit der geringen Porosität mindestens eine weitere keramische Schicht enthalten ist, so kann die weitere keramische Schicht auch als Haftvermittlerschicht für die Aufbringung der keramischen Schicht mit geringer Porosität wirken. Die keramische Schicht mit der geringen Porosität kann dicker sein als die chemisch gebundene weitere keramische Schicht. Hierdurch lässt sich die Korrosionsbeständigkeit des Substrats weiter verbessern.

Aufgrund der guten Temperaturbeständigkeit des keramischen Schichtverbundes und der aufgebrachten keramischen Schicht mit großer spezifischer Oberfläche, die eine verbesserte Verdampfung ermöglicht und gleichzeitig durch Verdampfen von auftreffender Flüssigkeit eine isolierend wirkende Dampfschicht bildet, kann der erfindungsgemäße keramische Schichtverbund vorzugsweise zur Herstellung von Glühstiftkerzen, wie diese in Verbrennungskraftmaschinen, insbesondere selbstzündenden Verbrennungskraftmaschinen, verwendet werden, eingesetzt werden.

### Kurze Beschreibung der Zeichnungen

Ausführungsformen der Erfindung sind in den Figuren dargestellt und in der nachfolgenden Beschreibung näher erläutert.

Es zeigen:
- Figur 1: einen erfindungsgemäß ausgebildeten keramischen Schichtverbund in einer ersten Ausführungsform,
- Figur 2: einen erfindungsgemäß ausgebildeten keramischen Schichtverbund in einer zweiten Ausführungsform.

### Ausführungsformen der Erfindung

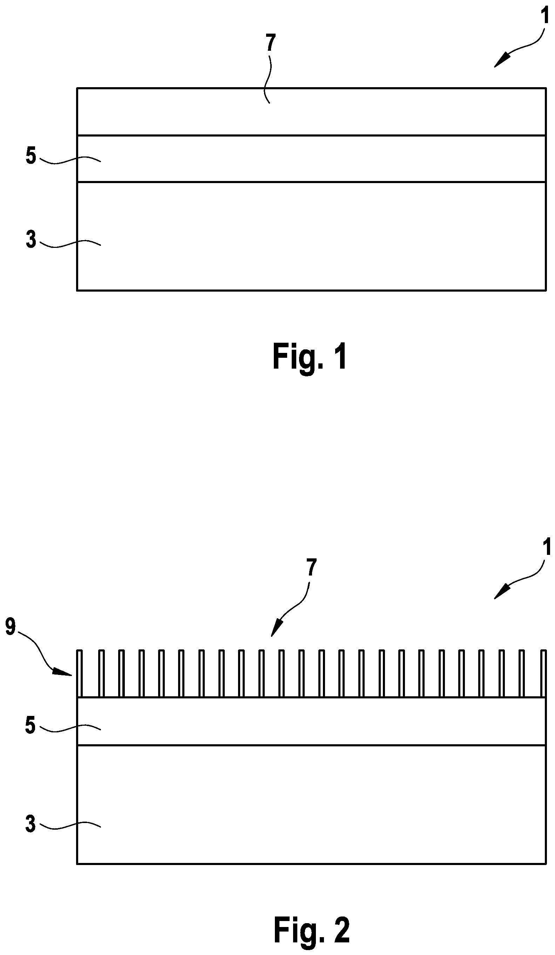

In Figur 1 ist ein erfindungsgemäß ausgebildeter keramischer Schichtverbund in einer ersten Ausführungsform dargestellt.

Ein keramischer Schichtverbund 1 umfasst ein keramisches Substrat 3 aus einer Nichtoxid-Keramik. Vorzugsweise ist das Substrat 3 aus einer Siliziumnitrid (Si₃N₄)-Keramik gefertigt. Vorteil der Siliziumnitrid-Keramik ist es, dass diese Werkstoffeigenschaften aufweist, die auch einen Einsatz des Schichtverbundes unter extremen Bedingungen erlaubt. Insbesondere einen Einsatz unter hohen Temperaturen.

Alternativ zu Siliziumnitrid können jedoch auch BN, TiN, TiAlN, AlN, Sialone, SiC eingesetzt werden. Bevorzugt ist jedoch Siliziumnitrid.

Wie bereits vorstehend beschrieben werden unter dem Begriff Nichtoxid-Keramik auch Nichtoxid-Kermikmaterialien verstanden, die mit ein oder mehreren Zusätzen dotiert oder versetzt sein können. Diese Zusätze können beispielsweise ausgewählt sein aus der Gruppe Al₂O₃, MgO, Yb₂O₃, Y₂O₃ und andere Seltenerdoxide, die zum Beispiel als Sinteradditive bei der Herstellung eingesetzt werden.

Auf das keramische Substrat ist eine keramische Schicht 5 aufgebracht. Die keramische Schicht 5 zeichnet sich durch eine geringe Porosität aus.

Das Aufbringen der keramischen Schicht 5 mit der geringen Porosität erfolgt vorzugsweise durch einen atmosphärischen Plasmasprüh-Prozess. Bei diesem wird ein Gasstrom aus hochenergetischem Plasma, einem ionisierten und dissoziierten Gas, erzeugt bei einer Temperatur von circa 12000 K, dem das Beschichtungsmaterial in Pulverform zugeführt wird, auf das zu beschichtende Substrat 3 gerichtet. Das pulverförmige Beschichtungsmaterial schmilzt und wird vom Gasstrom auf die Oberfläche des Beschichtungsgutes geschleudert, wo es sofort erstarrt. Durch die extremen Temperaturen können nahezu alle Werkstoffe, wie Metallpulver und auch hochschmelzende Keramikpulver als Beschichtungsmaterial verwendet werden. Das Verfahren ist besonders geeignet zur Herstellung harter Schutzschichten mit definierter Dicke. Üblicherweise wird das Verfahren bei Normaldruck durchgeführt. Es ist jedoch auch möglich, das Verfahren im Vakuum oder unter Schutzgas durchzuführen.

Erfindungsgemäß ist auf die keramische Schicht 5 mit geringer Porosität eine keramische Schicht 7 mit der großen spezifischen Oberfläche aufgebracht. Die große spezifische Oberfläche kann zum Beispiel dadurch erzielt werden, dass die keramische Schicht 7, wie in Figur 1 dargestellt, porös ist. Die Porosität wird zum Beispiel dadurch erzielt, dass gezielt eine poröse Schicht 7 auf die keramische Schicht 5 mit geringer Porosität aufgetragen wird. Die Porosität lässt sich zum Beispiel dadurch einstellen, dass Platzhalter mit dem Beschichtungsmaterial aufgetragen werden. Die Platzhalter werden nach dem Ausbilden der zweiten keramischen Schicht aus der keramischen Schicht 7 entfernt. Das Entfernen erfolgt zum Beispiel durch Herauslösen oder durch Ausbrennen. Ein Ausbrennen ist insbesondere dann möglich, wenn die Partikel, die die Poren füllen einen niedrigeren Flammpunkt haben als das Material der keramischen Schicht 7.

Das Auftragen der keramischen Schicht 7 mit der großen spezifischen Oberfläche erfolgt vorzugsweise durch einen Plasmasprüh-Prozess. Bei diesem werden die Keramikpartikel gezielt auf die keramische Schicht 5 mit geringer Porosität aufgetragen. Hierdurch wird bereits beim Auftragen der keramischen Schicht 7 eine gewünschte Porosität eingestellt. Alternativ ist es auch möglich, die keramische Schicht 7 mit der großen spezfischen Oberfläche mittels eines Suspensions-Plasma-Verfahrens, eines CVD-Verfahrens oder eines PVD-Verfahrens aufzubringen. Auch bei dem Auftragen der keramischen Schicht 7 mit der großen spezifischen Oberfläche mit Hilfe des Suspensions-Plasma-Verfahrens, des CVD-Verfahrens und des PVD-Verfahrens lässt sich die Porosität der keramischen Schicht 7 mit der großen spezifischen Oberfläche bereits durch das Auftragsverfahren einstellen.

Eine weitere Alternative ist es, die keramische Schicht 7 mit der großen spezifischen Oberfläche als Sol-Gel-Suspension aufzutragen und anschließend thermisch zu behandeln. Um in diesem Fall die Porosität der keramischen Schicht 7 mit der großen spezifischen Oberfläche einzustellen, werden der aufzutragenden Suspension Partikel zugesetzt. Dieses können zum Beispiel kugelförmige Partikel sein. Die Partikel sind vorzugsweise aus einem Material gefertigt, welches sich bereits bei niedrigen Temperaturen thermisch zersetzt. Geeignete Materialien sind zum Beispiel Polymere. Die Partikel werden nach dem Auftragen der Suspension aus der Beschichtung ausgebrannt. Hierdurch wird eine definierte Porosität in der keramischen Schicht 7 mit der großen spezifischen Oberfläche erzeugt.

In Figur 2 ist ein keramischer Schichtverbund in einer zweiten Ausführungsform dargestellt.

Der in Figur 2 dargestellte keramische Schichtverbund 1 unterscheidet sich von dem in Figur 1 dargestellten keramischen Schichtverbund 1 dadurch, dass auf die keramische Schicht 5 mit der geringen Porosität eine keramische Schicht 7 mit der großen spezifischen Oberfläche in Form einer Mikrostruktur 9 aufgebracht ist. Die Mikrostruktur 9 ist zum Beispiel, wie hier dargestellt, nadelförmig. Es ist jedoch auch jede andere Geometrie der Mikrostruktur 9 denkbar. Eine nadelförmige Struktur lässt sich z.B. durch gezieltes Auftragen des Beschichtungsmaterials in einem Plasmasprüh-Prozess erzeugen. Geeignete Materialien sind z.B. Mullit, Seltenerdsilikate, beispielsweise Y₂O₃*SiO₂ oder Yb₂O₃*SiO₂, Cordierit, Alumosilikat, Aluminiumnitrid, Aluminiumoxid oder Mischungen daraus. Besonders geeignet ist Mullit.

Zusätzlich oder alternativ zu den in den Figuren 1 und 2 dargestellten Ausführungsformen ist es auch möglich, die Oberfläche der keramischen Schicht 7 mit der großen spezifischen Oberfläche zu vergrößern, indem Vertiefungen in diese eingebracht werden. Die Vertiefungen können dabei jede beliebige Form einnehmen. Bevorzugt ist es, wenn die Vertiefungen durch eine Laserbehandlung der Oberfläche der keramischen Schicht 7 mit der großen spezifischen Oberfläche erzeugt werden. Es ist jedoch auch möglich, wenn die Vertiefungen in Form von Bohrungen in die keramische Schicht 7 mit der großen spezifischen Oberfläche eingebracht werden.

Durch die erfindungsgemäße Beschichtung ist das keramische Substrat 3 sowohl gegen Korrosion als auch gegen Thermoschocks geschützt. Die keramische Schicht 5 mit geringer Porosität wirkt als Korrosionsschutzschicht. Diese bewahrt das keramische Material des Substrates 3 vor einer Oxidierung. Die keramische Schicht 7 mit der großen spezifischen Oberfläche wirkt als Verdampfungsschicht. An dieser verdampfen auftreffende Flüssigkeiten und bilden eine Dampfschicht aus. Diese dient als zusätzliche Isolierung, so dass keine kalte Flüssigkeit auf das Substrat 3 auftreffen kann.

Neben den in den Figuren 1 und 2 dargestellten Ausführungsformen ist es weiterhin möglich, dass zwischen dem Substrat 3 und der keramischen Schicht 5 mit geringer Porosität mindestens eine weitere keramische Schicht aufgetragen wird. Die mindestens eine weitere keramische Schicht hat vorzugsweise ebenfalls eine geringe Porosität und wirkt somit als Korrosionsschutzschicht. Das Material für die weiteren keramischen Schichten, die zwischen dem Substrat 3 und der keramischen Schicht 5 mit der geringen Porosität aufgenommen sein können, ist vorzugsweise das gleiche wie das Material für die keramische Schicht 5 mit geringer Porosität.

Der erfindungsgemäße keramische Schichtverbund 1 findet vorzugsweise Einsatz für Hochtemperaturanwendungen in korrosiven Umgebungen. Derartige Anwendungen sind zum Beispiel Glühstiftkerzen in selbstzündenden Verbrennungskraftmaschinen.

## Patentansprüche

1. Keramischer Schichtverbund für den Einsatz für Hochtemperaturanwendungen in korrosiven Umgebungen, umfassend ein keramisches Substrat (3) aus einer Nichtoxidkeramik, auf das eine keramische Schicht (7) aufgebracht ist, wobei die keramische Schicht (7) eine große spezifische Oberfläche, die im Bereich von 10 m²/g bis 350 m²/g liegt, aufweist, und wobei zwischen dem keramischen Substrat (3) und der keramischen Schicht (7) mit großer spezifischer Oberfläche eine weitere keramische Schicht (5) mit einer geringen Porosität mit einem Porenvolumen < 10 %, aufgebracht ist, **dadurch gekennzeichnet, dass** die keramische Schicht (5) mit der geringen Porosität und die keramische Schicht (7) mit der großen spezifischen Oberfläche aus der gleichen Keramik ausgebildet sind.

2. Keramischer Schichtverbund gemäß Anspruch 1, **dadurch gekennzeichnet, dass** zwischen dem keramischen Substrat (3) und der keramischen Schicht (5) mit der geringen Porosität mindestens eine weitere keramische Schicht enthalten ist.

3. Keramischer Schichtverbund gemäß Anspruch 1, **dadurch gekennzeichnet, dass** die keramische Schicht (7) mit der großen spezifischen Oberfläche Mullit, ein Seltenerdsilikat, Cordierit, ein Alumosilikat, Aluminiumnitrid, Aluminiumoxid oder Mischungen daraus, vorzugsweise Mullit oder ein Seltenerdsilikat, enthält.

4. Keramischer Schichtverbund gemäß einem der Ansprüche 1 bis 3, **dadurch gekennzeichnet, dass** die keramische Schicht (7) mit der großen spezifischen Oberfläche porös ist.

5. Keramischer Schichtverbund gemäß einem der Ansprüche 1 bis 4, **dadurch gekennzeichnet, dass** die keramische Schicht (7) mit der großen spezifischen Oberfläche an ihrer Oberfläche Vertiefungen enthält oder in Form einer Mikrostruktur (9) auf den keramischen Schichtverbund (1) aufgebracht ist.

6. Verwendung des keramischen Schichtverbundes gemäß einem der Ansprüche 1 bis 5 als Material für Glühstiftkerzen für Verbrennungskraftmaschinen.

## Claims

1. Ceramic layer composite for use for high-temperature applications in corrosive environments, comprising a ceramic substrate (3) of a non-oxide ceramic onto which is deposited a ceramic layer (7), wherein the ceramic layer (7) has a large specific surface area in the range from 10 m²/g to 350 m²/g, and wherein another ceramic layer (5), having low porosity with a pore volume < 10% is applied between the ceramic substrate (3) and the ceramic layer (7), **characterized in that** the ceramic layer (5) having the low porosity and the ceramic layer (7) having the large specific surface area are made of the same ceramic.

2. Ceramic layer composite according to Claim 1, **characterized in that** at least one further ceramic layer is contained between the ceramic substrate (3) and the ceramic layer (5) having the low porosity.

3. Ceramic layer composite according to Claim 1, **characterized in that** the ceramic layer (7) with the large specific surface area contains mullite, a rare-earth silicate, cordierite, an aluminosilicate, aluminium nitride, aluminium oxide or mixtures thereof, preferably mullite or a rare-earth silicate.

4. Ceramic layer composite according to one of Claims 1 to 3, **characterized in that** the ceramic layer (7) having the large specific surface area is porous.

5. Ceramic layer composite according to one of Claims 1 to 4, **characterized in that** the ceramic layer (7) having the large specific surface area has depressions on its surface or is deposited onto the ceramic layer composite (1) in the form of a microstructure (9).

6. Use of the ceramic layer composite according to one of Claims 1 to 5, as a material for sheathed-element glow plugs for internal combustion engines.

## Revendications

1. Composite céramique stratifié pour l'utilisation pour des applications à haute température dans des environnements corrosifs, comprenant un substrat céramique (3) en céramique sans oxyde, sur lequel est appliquée une couche céramique (7), la couche céramique (7) présentant une grande surface spécifique qui est comprise dans une plage de 10 m²/g à 350 m²/g, et une couche céramique supplémentaire (5) ayant une plus faible porosité avec un volume de pores < 10 % étant appliquée entre le substrat céramique (3) et la couche céramique (7) de grande surface spécifique, **caractérisé en ce que** la couche céramique (5) de faible porosité et la couche céramique (7) de grande surface spécifique sont réalisées à partir de la même céramique.

2. Composite céramique stratifié selon la revendication 1, **caractérisé en ce qu'**au moins une couche céramique supplémentaire est incluse entre le substrat céramique (3) et la couche céramique (5) de plus faible porosité.

3. Composite céramique stratifié selon la revendication 1, **caractérisé en ce que** la couche céramique (7) de grande surface spécifique contient de la mullite, un silicate de terres rares, de la cordiérite, un aluminosilicate, un oxyde d'aluminium ou des mélanges de ceux-ci, de préférence de la mullite ou un silicate de terres rares.

4. Composite céramique stratifié selon l'une quelconque des revendications 1 à 3, **caractérisé en ce que** la couche céramique (7) de grande surface spécifique est poreuse.

5. Composite céramique stratifié selon l'une quelconque des revendications 1 à 4, **caractérisé en ce que** la couche céramique (7) de grande surface spécifique contient des renfoncements au niveau de sa surface ou est appliquée sous forme de microstructure (9) sur le composite céramique stratifié (1) .

6. Utilisation du composite céramique stratifié selon l'une quelconque des revendications 1 à 5 en tant que matériau pour des bougies-crayons à incandescence pour moteurs à combustion interne.
